# EUROPEAN PATENT SPECIFICATION

(11) **EP 2 818 669 B1**
(45) Date of publication and mention of the grant of the patent: **24.02.2016**
(21) Application number: 14171103.6
(22) Date of filing: 04.06.2014
(51) Int. Cl.: F02C 7/22, F02C 7/24, F02C 7/25

(54) **High temperature fuel manifold for gas turbine engines**
Hochtemperatur-Kraftstoffverteiler für Gasturbinenmotoren
Collecteur de combustible à haute température pour moteurs à turbine à gaz

(30) Priority: 05.06.2013 US 201313910573
(43) Date of publication of application: 31.12.2014
(73) Proprietor: Delavan Inc., West Des Moines, IA 50265 (US)
(72) Inventor: Bleeker, Daniel E., Ankeny, IA Iowa 50023 (US)
(74) Representative: Hall, Matthew Benjamin

(56) References cited:
- US-A- 2 913 011
- US-A1- 2005 189 029
- US-A1- 2011 000 572
- US-A1- 2012 073 299

## Description

### BACKGROUND OF THE INVENTION

### 1. Field of the Invention

The present invention relates to fluid distribution manifolds, and more particularly to high temperature fuel manifolds for gas turbine engines.

### 2. Description of Related Art

The fuel manifold system of a gas turbine engine distributes fuel from a fuel control system to a plurality of fuel injectors mounted on the engine case. The fuel injectors are configured to issue atomized fuel into the combustor of the engine. It is well known that combustor inlet air temperatures can be extremely high (e.g., 1300°F, 704.4°C), and the combustion of fuel drives temperatures even higher. High combustor temperatures are necessary in order to fully ignite the fuel and to derive the maximum amount of energy available from the burning fuel in a turbine, and often a nozzle, located downstream of the combustor. Under basic thermodynamic principals, increasing the temperature and/or pressure of combustion gases increases the amount of useful energy that can be produced. As gas turbine engine technologies have advanced, higher and higher operating temperatures have become possible, making for increasingly powerful and efficient engines.

The high operating temperatures in modern gas turbine engines put a tremendous thermal strain on engine components associated with the combustor casing. These engine components must structurally accommodate thermal expansion and contraction of the combustor casing during engine operating cycles. There is a particularly high gradient of thermal expansion at the fuel manifold, where the internal fuel temperature is relatively low compared to the external gas temperatures. A combustor casing is typically around room temperature prior to engine start up, and then heats up to a high operating temperature during high power engine operation, such as during takeoff. While the combustor casing expands and contracts considerably with these thermal cycles of the engine, the fuel manifold undergoes comparatively little thermal expansion due to the relatively cool fuel flowing through it. This cycling difference in thermal expansion between the engine case and fuel manifold must be accommodated to avoid stress related failures.

Traditionally, thermal expansion of the combustor case has been accommodated by using curved metal tubes to flexibly connect the fuel lines of the manifold assembly to the fuel injectors. An example of a fuel manifold assembly that includes curved metal tubes is shown in U.S. Patent No. 5,197,288 to Newland et al. Prior art designs of this type have certain disadvantages such as susceptibility to vibration and fatigue.

Another solution has been to use flexible hoses to connect between injector fixtures of the manifold assembly to accommodate thermal expansion. The United States Military Defense Standards MIL-DTL-25579 establishes an upper limit of 450°F (232.2°C) for the air around a flexible fuel manifold in a gas turbine engine. However, today's high performance gas turbine engines have air temperatures outside the engine case that far exceed that standard. Typical fuel systems are expected to be able to routinely operate in temperatures in excess of 800° F (426.67° C).

Additionally, the Federal Aviation Authority (FAA) requires that commercial engine fuel systems undergo a flame endurance test to ensure that the fuel systems can safely operate even under prolonged exposure to flames. Exposure to flames can compromise fuel manifold hoses. It is known to provide a fire sleeve around the hose portions of such manifolds to improve flame resistance. However as gas turbine technology advances, the operating temperatures continue to rise to levels that can compromise even hoses with conventional fire sleeves.

One solution to this problem has been to utilize a telescoping outer wall outside the fire sleeve, as disclosed in U.S. Patent No. 4,467,610 to Pearson et al. While this may improve the ability of a manifold to endure high temperatures and flames, such mechanisms add to the cost and mechanical complexity of flexible hose type fuel manifolds. Additional solutions are described in commonly assigned U.S. Patent Application Publication No. 2012/0073299.

Such conventional methods and systems have generally been considered satisfactory for their intended purpose. However, there is still a need in the art for fuel manifolds that allow for improved high temperature operation and flame resistance. There also remains a need in the art for such manifolds that are easy to make and use. The present invention may provide a solution for these problems.

### SUMMARY OF THE INVENTION

The present invention provides a segment of a fluid manifold comprising: a flexible thermal shield with an insulation space defined inboard of the thermal shield to provide thermal isolation from conditions external to the thermal shield, wherein the thermal shield includes a helically corrugated metal tube having opposed first and second ends; and an outer collar threaded to a first end of the helically corrugated metal tube via internal threads, wherein a vent is defined between the outer collar and the flexible thermal shield in venting communication with the insulation space; a liner defining an internal fluid passage therethrough fluidly connecting a pair of hose fitting inserts, wherein the flexible thermal shield is outboard of the liner, wherein the insulation space is defined between the liner and the flexible thermal shield, and wherein the outer collar includes fitting threads engaged with threads on one of the hose fitting inserts, characterised in that the outer collar includes a crimped portion and an uncrimped portion causing the fitting threads and the internal threads of the outer collar to be structurally ovalized relative to the threads of the hose fitting insert and the helically corrugated metal tube engaged respectively thereto to prevent unthreading of the outer collar, the uncrimped portion being spaced apart from the helically corrugated metal tube more than the crimped portion to define the vent between the outer collar and the helically corrugated metal tube in venting communication with the insulation space.

It is contemplated that there can be four crimped portions circumferentially alternating with four respective uncrimped portions to form four vents from the insulation space to an area outside the flexible thermal shield.

In certain embodiments, a wire braid layer surrounds the liner inboard of the flexible thermal shield. A fire sleeve can be included, e.g., surrounding the wire braid layer, wherein the insulation space is defined between the fire sleeve and the thermal shield to thermally isolate the fire sleeve from conditions external to the thermal shield. The fire sleeve can include a layer of high temperature fiberglass insulation, for example, the fire sleeve can include an AS1072 silicone rubber coated fiber glass fire sleeve.

A fuel manifold for distributing fuel to a gas turbine engine can include a plurality of interconnected manifold segments. Each manifold segment extends between a pair of fuel injector inlet fittings, wherein each manifold segment is as described above.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a cross-sectional perspective view of a portion of an exemplary embodiment of a segment of a fluid manifold, showing the flexible thermal shield and the outer collar threaded to one end of the flexible thermal shield;
Fig. 2 is a schematic cross-sectional end view of the outer collar of Fig. 1, showing schematically forces being applied from four directions equally spaced to crimp the outer collar;
Fig. 3 is a perspective view of a portion of the segment of a fuel manifold of Fig. 1, showing vents between the crimp collar and the flexible thermal shield;

### DETAILED DESCRIPTION OF THE PREFERRED EMBODIMENTS

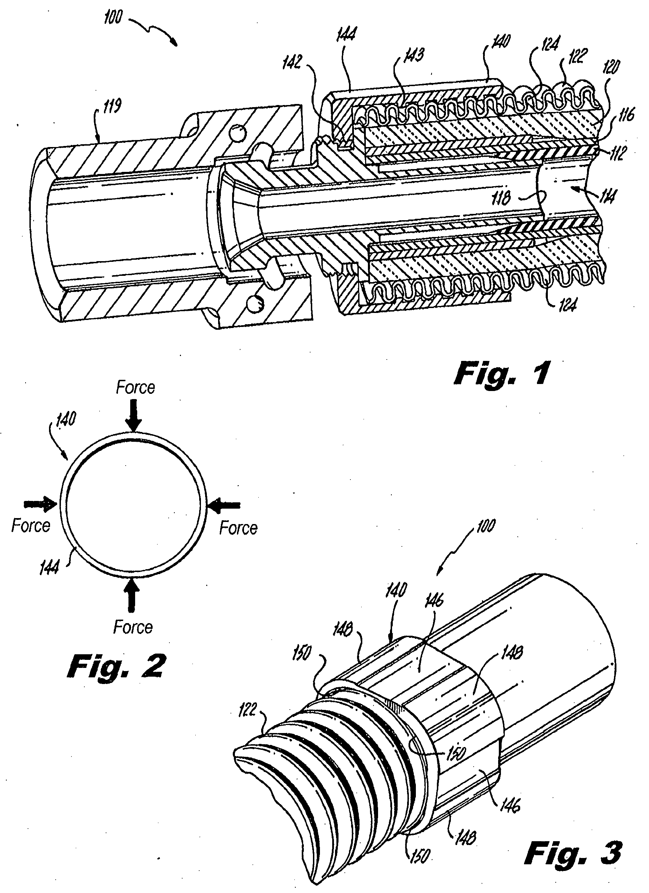

Reference will now be made to the drawings wherein like reference numerals identify similar structural features or aspects of embodiments of the subject invention. For purposes of explanation and illustration, and not limitation, a partial view of an exemplary embodiment of a segment for a fluid manifold is shown in Fig. 1 and is designated generally by reference character 100. Other embodiments of segments for fluid manifolds, or aspects thereof, are provided in Figs. 2-3, as will be described. The systems and methods of the invention can be used to improve high temperature operation and flame resistance, for example in fuel manifolds of gas turbine engines.

Manifold segment 100 includes a fuel liner 112 with a fuel passage 114 therethrough. Liner 112 fluidly connects a pair of hose fitting insert 118, each having a nut 119 for connection to a manifold. Wire braid layer 116 surrounds liner 112, and a fire sleeve 120 surrounds wire braid layer 116. Fire sleeve 120 can include a layer of high temperature fiberglass insulation, for example, fire sleeve 120 can include an AS1072 silicone rubber coated fiber glass fire sleeve.

A flexible thermal shield 122 surrounds fire sleeve 120 outboard thereof. An insulation space 124 is defined between fire sleeve 120 and thermal shield 122 to thermally isolate fire sleeve 120, and everything inboard thereof, from conditions external to thermal shield 122. Thermal shield 122 includes a helically corrugated metal tube having opposed first and second ends, which lends flexibility to thermal shield 122 and to manifold segment 100 overall. This flexibility allows for a manifold of assembled segments 100 to be manipulated into place on an engine during installation, for example, as well as allowing accommodation of differential thermal expansion within an engine.

Thermal shield 122 is connected at each end, only one end of which is shown in Fig. 1 for sake of clarity, to the respective hose fitting insert 118 by an outer collar 140 threaded thereto. Outer collar 140 has internal threads 143 which intermesh with the helical coils of thermal shield 122. Additional threads, namely fitting threads 142 engage outer collar 140 to hose fitting insert 118, which has corresponding threads. Internal threads 143 and fitting threads 142 are depicted as having different widths and pitches, however any appropriate thread sizes and pitches can be used without departing from the scope of this disclosure. To increase the engagement of outer collar 140 to thermal shield 122, cylindrical portion 144 of outer collar 140 is crimped inward to ovalized the threads 142 and 143 to prevent outer collar 140 coming unthreaded due to vibrations, for example. Outer threads that are structurally ovalized relative to mating internal threads prevent backing out or unthreading of the threads relative to one another.

Referring now to Fig. 2, the crimping of outer collar 140 is indicated schematically. The four large arrows indicate the outer collar 140 is crimped in four places circumferentially spaced apart. Crimping in this way leaves a double ovalized structure in outer collar 140, i.e., outer collar 140 has an ovalized structure in two directions, to prevent unthreading as explained above. The resulting structure of outer collar 140 is shown in Fig. 3, which shows two of the four resulting crimped portions 146 of outer collar 140, and two of the four resulting uncrimped portions 148 of outer collar 140. Those skilled in the art will readily appreciate that while only two each of the crimped and uncrimped portions 146 and 148 are indicated in Fig. 3, there are four crimped portions 146 that alternate circumferentially with four uncrimped portions. Those skilled in the art will also readily appreciate that any other suitable number of crimped and uncrimped portions can be used without departing from the scope of this disclosure.

With continued reference to Fig. 3, uncrimped portions 148 are spaced apart from thermal shield 122 more than are crimped portions 146. The space between each uncrimped portion 148 and thermal shield 122 defines a respective air path vent 150 between outer collar 140 and thermal shield 122 in venting communication with the insulation space 124 shown in Fig. 1. Since thermal shield 122 is helical, there is a continuous, helical passage formed in insulation space 124, which can vent outward to an area outside thermal shield 122 through vents 150 on either end of manifold segment 100. Thus, hot gas can escape insulation space 124 when manifold segment 100 is heated, keeping the pressure in insulation space 124 relatively low and maintaining minimal or no liquid ingress.

A fuel manifold for distributing fuel to a gas turbine engine can include a plurality of interconnected manifold segments such as segments 100 described above. Each manifold segment 100 can extend between a pair of fuel injector inlet fittings, for example.

While the description above provides exemplary materials for the various components, those skilled in the art will readily appreciate that any suitable materials can be used for the various components without departing from the scope of this disclosure. Moreover, while manifold segments have been described above in the exemplary context of fuel manifolds for gas turbine engines, those skilled in the art will readily appreciate that manifolds or segments as described above can be used in any suitable application without departing from the scope of this disclosure. For example, fluid manifold segments in accordance with those above can be used advantageously in hydraulic lines in high temperature environments, or in environments with potential fire risk.

The methods and systems of the present disclosure, as described above and shown in the drawings, provide for flexible fuel manifolds and fluid manifold segments with superior properties including high temperature operation and flame resistance, while maintaining flexibility to handle thermal expansion and contraction. Moreover, the examples provided above have the additional advantage of precluding unwanted ingress of liquids such as fuel into the insulation space of the manifold segments. While the apparatus and methods of the subject disclosure have been shown and described with reference to preferred embodiments, those skilled in the art will readily appreciate that changes and/or modifications may be made thereto without departing from the scope of the subject disclosure as defined in the appended claims.

## Claims

1. A segment of a fluid manifold (100) comprising:
a flexible thermal shield (122) with an insulation space (124) defined inboard of the thermal shield to provide thermal isolation from conditions external to the thermal shield, wherein the thermal shield includes a helically corrugated metal tube having opposed first and second ends; and
an outer collar (140; 240; 340; 440; 540) threaded to a first end of the helically corrugated metal tube via internal threads (143), wherein a vent is defined between the outer collar and the flexible thermal shield in venting communication with the insulation space;
a liner (112) defining an internal fluid passage (114) therethrough fluidly connecting a pair of hose fitting inserts (118; 218; 318; 418; 518), wherein the flexible thermal shield is outboard of the liner, wherein the insulation space is defined between the liner and the flexible thermal shield, and wherein the outer collar includes fitting threads (142) engaged with threads on one of the hose fitting inserts,
**characterised in that** the outer collar (140) includes a crimped portion (146) and an uncrimped portion (148) causing the fitting threads (142) and the internal threads (143) of the outer collar to be structurally ovalized relative to the threads of the hose fitting insert and the helically corrugated metal tube engaged respectively thereto to prevent unthreading of the outer collar, the uncrimped portion being spaced apart from the helically corrugated metal tube more than the crimped portion to define the vent (150) between the outer collar and the helically corrugated metal tube in venting communication with the insulation space.

2. A segment of a fluid manifold as recited in claim 1, wherein there are four crimped portions circumferentially alternating with four respective uncrimped portions to form four vents from the insulation space to an area outside the flexible thermal shield.

3. A fuel manifold for distributing fuel to a gas turbine engine comprising:
a plurality of interconnected manifold segments as claimed in any preceding claim, each manifold segment extending between a pair of fuel injector inlet fittings.

## Patentansprüche

1. Segment eines Fluidverteilers (100), umfassend:
eine flexible thermische Abschirmung (122) mit einem Isolationsraum (124), der innerhalb der thermischen Abschirmung definiert ist, um thermische Isolierung von Bedingungen außerhalb der thermischen Abschirmung bereitzustellen, wobei die thermische Abschirmung ein spiralförmig gewelltes Metallrohr mit gegenüberliegenden ersten und zweiten Enden aufweist; und
eine Außenmanschette (140; 240; 340; 440; 540), die über ein Innengewinde (143) auf ein erstes Ende des spiralförmig gewellten Metallrohrs geschraubt ist, wobei eine Entlüftung zwischen der Außenmanschette und der flexiblen thermischen Abschirmung definiert ist, die in Entlüftungsverbindung mit dem Isolationsraum steht;
eine Auskleidung (112), die einen internen Fluiddurchlass (114) dadurch definiert, dass er ein Paar Schlauchanschlusseinsätze (118; 218; 318; 418; 518) in Fluidverbindung setzt, wobei die flexible thermische Abschirmung außerhalb der Auskleidung ist, wobei der Isolationsraum zwischen der Auskleidung und der flexiblen thermischen Abschirmung definiert ist und wobei die Außenmanschette ein Anschlussgewinde (142) aufweist, das mit einem Gewinde an einem der Schlauchanschlusseinsätze in Eingriff steht,
**dadurch gekennzeichnet, dass** die Außenmanschette (140) einen gebördelten Abschnitt (146) und einen nicht gebördelten Abschnitt (148) aufweist, was bewirkt, dass das Anschlussgewinde (142) und das Innengewinde (143) der Außenmanschette im Verhältnis zu dem Gewinde des Schlauchanschlusseinsatzes und dem jeweils damit in Eingriff stehenden spiralförmig gewellten Metallrohr strukturell ovaliert ist, um ein Herausschrauben der Außenmanschette zu verhindern, wobei der nicht gebördelte Abschnitt weiter als der gebördelte Abschnitt von dem spiralförmig gewellten Rohr beabstandet ist, um die Entlüftung (150) zwischen der Außenmanschette und dem spiralförmig gewellten Metallrohr in Entlüftungsverbindung mit dem Isolationsraum zu definieren.

2. Segment eines Fluidverteilers nach Anspruch 1, wobei vier gebördelte Abschnitte vorliegen, die sich in Umfangsrichtung mit vier jeweiligen nicht gebördelten Abschnitten abwechseln, um vier Entlüftungen des Isolationsraums an einen Bereich außerhalb der flexiblen thermischen Abschirmung zu bilden.

3. Kraftstoffverteiler zum Verteilen von Kraftstoff an einen Gasturbinenmotor, umfassend:
eine Mehrzahl miteinander verbundener Verteilersegmente nach einem der vorangehenden Ansprüche, wobei sich jedes Verteilersegment zwischen einem Paar Kraftstoffeinspritzeinlassanschlüssen erstreckt.

## Revendications

1. Segment d'un collecteur de fluide (100) comprenant :
un bouclier thermique flexible (122) doté d'un espace d'isolation (124) défini à l'intérieur du bouclier thermique pour fournir une isolation thermique vis-à-vis de conditions externes au bouclier thermique, dans lequel le bouclier thermique comprend un tube en métal ondulé hélicoïdal ayant des première et seconde extrémités opposées ; et
un collier externe (140 ; 240 ; 340 ; 440 ; 540) fileté sur une première extrémité du tube en métal ondulé hélicoïdal via des filetages internes (143), dans lequel un évent est défini entre le collier externe et le bouclier thermique flexible en communication de ventilation avec l'espace d'isolation ;
une chemise (112) définissant un passage fluidique interne (114) à travers celle-ci raccordant fluidiquement une paire d'inserts de raccord de tuyau souple (118 ; 218 ; 318 ; 418 ; 518), dans lequel le bouclier thermique flexible est à l'extérieur de la chemise, dans lequel l'espace d'isolation est défini entre la chemise et le bouclier thermique flexible, et dans lequel le collier externe comprend des filetages de raccord (142) enclenchés avec des filetages sur l'un des inserts de raccord de tuyau souple,
**caractérisé en ce que** le collier externe (140) comprend une portion sertie (146) et une portion non sertie (148) amenant les filetages de raccord (142) et les filetages internes (143) du collier externe à être structurellement ovalisés par rapport aux filetages de l'insert de raccord de tuyau souple et du tube en métal ondulé hélicoïdal enclenchés respectivement avec celui-ci afin d'empêcher le dévissage du collier externe, la portion non sertie étant davantage espacée du tube en métal ondulé hélicoïdal que la portion sertie pour définir l'évent (150) entre le collier externe et le tube en métal ondulé hélicoïdal en communication de ventilation avec l'espace d'isolation.

2. Segment d'un collecteur de fluide selon la revendication 1, dans lequel il y a quatre portions serties en alternance circonférentielle avec quatre portions non serties respectives pour former quatre évents à partir de l'espace d'isolation jusqu'à une zone externe au bouclier thermique flexible.

3. Collecteur de carburant destiné à distribuer du carburant à un moteur à turbine à gaz comprenant :
une pluralité de segments de collecteur reliés les uns aux autres selon l'une quelconque des revendications précédentes, chaque segment de collecteur s'étendant entre une paire de raccords d'arrivée d'injecteur de carburant.
